# EUROPEAN PATENT APPLICATION

(11) **EP 3 068 020 A1**
(43) Date of publication of application: **14.09.2016**
(21) Application number: 16155853.1
(22) Date of filing: 16.02.2016
(51) Int. Cl.: H02K 3/52, H02P 25/16

(54) **MULTI-POLE, THREE-PHASE ROTARY ELECTRIC MACHINE**

(30) Priority: 12.03.2015 JP 2015048952
(71) Applicant: HONDA MOTOR CO., LTD., Tokyo, 107-8556 (JP)
(72) Inventor: TAKAHASHI, Masahiro, Wako-shi, Saitama 351-0193 (JP); KANEKO, Nobuyuki, Wako-shi, Saitama 351-0193 (JP)
(74) Representative: Weickmann & Weickmann PartmbB

(57) **Abstract**

A multi-pole, three-phase rotary electric machine includes a multiplicity of armature windings (25) provided on a stator (20). Respective one ends (25w, 25v, 25u) of the armature windings (25) are external connection ends that are connected with one another in three phases, while respective other ends (25c) of the armature windings (25) being neutral ends that are all connected together with one another. The external connection ends (25w, 25v, 25u) of the multiplicity of armature windings (25) are located on one axial side of the stator (20), and the neutral ends (25c) of the multiplicity of armature windings (25) are located on the other axial side of the stator (20) opposite the external connection ends (25w, 25v, 25u).

## Description

The present invention relates to an improvement of the multi-pole, three-phase rotary electric machines where a multiplicity of armature windings are connected in parallel with one another.

The conventionally-known multi-pole, three-phase rotary electric machines, each of which has a multiplicity of armature windings provided on a stator, are constructed, for example, as electric motors and electric power generators. One example of such three-phase rotary electric machines is known from Japanese Patent Application Laid-open publication No. 2009-118653.

The No. 2009-118653 publication discloses an outer-rotor type three-phase, multi-pole rotary electric machine where every eight of 24 armature windings are connected in series to thereby provide three groups of windings (winding group). Thus, a three-phase winding structure is constructed of these three winding groups. Each of the winding groups is fused (thermally caulked) at its opposite ends to connection terminals. Such a structure requires only six connection terminals and thus can avoid dense crowding of the connection terminals.

Further, among the conventionally-known multi-pole, three-phase rotary electric machines are ones employing a so-called parallel connection configuration where all of the armature windings are connected together at their respective one ends. The respective one ends of the many armature windings are external connection ends that are connected with one another in three phases, i.e. individually for each of the three phases, while the respective other ends of the many armature windings are neutral ends that are all connected together with one another. In the case where the parallel connection configuration is employed, the number of the connection terminals needs to be two times the number of the armature windings, which would present a problem of dense crowding of the connection terminals.

Examples of parallel connection constructions in the conventionally-known multi-pole, three-phase rotary electric machines employing the parallel connection configuration include the following types. The first type of parallel connection construction is a bus-ring-based construction where a bus ring has a multiplicity of terminals (bus ring terminals) provided thereon and respective ends of a multiplicity of armature windings are fused to corresponding ones of the bus ring terminals. The second type of parallel connection construction is where respective ends of a multiplicity of armature windings are welded to corresponding terminals.

However, with the bus-ring-based structure, the multiplicity of bus ring terminals would densely crowd, and thus, a pitch at which the bus ring terminals are disposed (i.e., disposed pitch between the bus ring terminals) would unavoidably become small. If the disposed pitch of the bus ring terminals is small like this, it is difficult to perform fusing (thermal caulking) between the ends of the armature windings and the bus ring terminals. Thus, it is not possible to automatically manufacture a stator having a multiplicity of armature windings.

Further, in order to secure sufficient electrical insulation distances between the individual bus ring terminals, it is necessary to secure a sufficient pitch between the individual bus ring terminals, for which purpose the diameter of the bus ring has to be increased in diameter. Particularly, in the case of a multi-pole electric power generating alternator that outputs a high voltage, the bus ring would excessively become large in size as compared to the stator, which would undesirably result in an increased size of the rotary electric machine.

In view of the foregoing prior art problems, it is an object of the present invention to provide an improved technique which allows respective ends of a multiplicity of armature windings to be disposed on a stator without densely crowding.

In order to accomplish the above-mentioned object, the present invention provides an improved multi-pole, three-phase rotary electric machine which comprises a multiplicity of armature windings provided on a stator. Respective one ends of the armature windings are external connection ends that are connected with one another in three phases (i.e., individually for each of the three phases), while respective other ends of the armature windings are neutral ends that are all connected together with one another. The external connection ends of the multiplicity of armature windings are located on one axial side of the stator, and the neutral ends of the multiplicity of armature windings are located on the other axial side of the stator opposite the external connection ends.

According to the present invention, the multiplicity of external connection ends and the multiplicity of neutral ends are disposed opposite from each other with respect to the stator having the multiplicity of armature windings provided thereon. Thus, the multiplicity of external connection ends and the multiplicity of neutral ends are disposed dispersedly on the stator without densely crowding close to one another. Accordingly, the disposed pitch between terminals for connecting the respective ends of the multiplicity of armature windings can be increased, so that sufficient electrical insulation distances among the terminals can be secured with ease.

For example, the present invention can secure a sufficient pitch between bus ring terminals, provided for connecting the individual ends of the multiplicity of armature windings, without increasing diameters of the bus rings. Thus, the respective ends of the multiplicity of armature windings and the bus ring terminals can be easily fused (thermally caulked) with each other. In this way, the stator having the multiplicity of armature windings provided thereon can be manufactured automatically. Besides, by reducing the diameters of the bus rings, the present invention can reduce the size of the multi-pole, three-phase rotary electric machine. Further, the present invention can increase the number of the armature windings while avoiding an increase in the diameters of the bus rings, and thus, the present invention can provide a stator having the increased number of the armature windings..

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will hereinafter be described in detail, by way of example only, with reference to the accompanying drawings, in which:
Fig. 1 is a sectional view showing an embodiment of a multi-pole, three-phase rotary electric machine of the present invention;
Fig. 2 is a side view of a stator of the rotary electric machine as viewed from the side of an opening of a casing of the rotary electric machine;
Fig. 3 is a sectional view taken along the 3 - 3 of Fig. 2;
Fig. 4 is a side view of the stator of the rotary electric machine as viewed from the side of the bottom surface of the casing; and
Fig. 5 is a development diagram showing a multiplicity of salient poles and armature windings wound on the salient poles in the rotary electric machine.

### DETAILED DESCRIPTION OF THE INVENTION

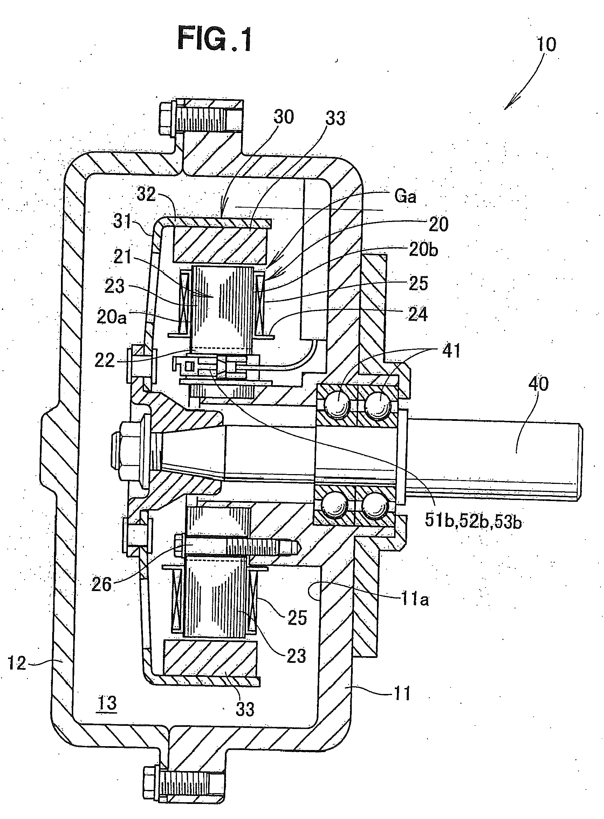

Fig. 1 is a sectional view showing an embodiment of a multi-pole, three-phase rotary electric machine 10 of the present invention. As shown, the multi-pole, three-phase rotary electric machine 10 includes a multiplicity of armature windings provided on a stator 20. Note that the multi-pole, three-phase rotary electric machine 10 is constructed as an electric motor for converting electrical energy into mechanical energy or as an electric power power generator for converting mechanical energy into electric energy. The power generator is driven, for example, by an engine. Hereinafter, the three-phase rotary electric machine 10 will be described as constructed as an electric motor.

The multi-pole, three-phase rotary electric machine 10, which is an outer-rotor type, DC brushless rotary electric machine, will hereinafter be referred to simply as "rotary electric machine 10". The rotary electric machine 10, which has a multiplicity of poles (e.g., twenty-one poles), includes a casing 11, a lid 12, the stator 20, a rotor 30 and a rotation shaft 40. The stator 20 and the rotor 30 are accommodated in a space surrounded or defined by the casing 11 and the lid 12 closing an opening of the case 11.

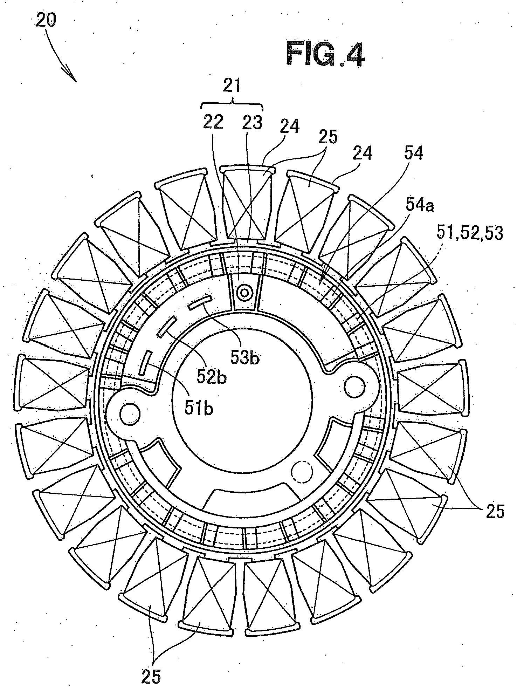

Further, as shown in Figs. 1 to 4, the stator 20 is an inner stator with a multiplicity of armature windings (e.g., twenty-one armature windings) 25 provided thereon. The multiplicity of armature windings (e.g., twenty-one armature windings) 25 are disposed on the stator 20 at an equal pitch along the outer circumference of the stator 20. The stator 20 includes a stator core (stator iron core) 21 and the multiplicity of armature windings 25. The stator core 21 comprises a lamination of a plurality of electromagnetic steel plates stacked on one another in a thickness direction (axial direction) of the core 21. The stator core 21 includes an annular or ring-shaped core base 22, and a multiplicity of salient poles (teeth) 23 projecting radially outward from the outer circumferential surface of the core base 22.

The salient poles 23 are disposed at an equal pitch along the outer circumference of the core base 22, and cylindrical bobbins 24 are fitted over corresponding ones of the salient poles 23. Each of the armature windings 25 is wound on any one of the bobbins 24 and hence around any one of the salient poles 23. The stator 20 constructed in the aforementioned manner is fixed to the casing 11 by means of a plurality of bolts 26.

Further, as shown in Fig. 1, the rotor 30 is an outer rotor formed in a generally cup shape (i.e., in a flanged disk shape) so as to surround the entire circumference of the stator 20, and the rotor 30 is coupled to the rotation shaft 40. The rotation shaft 40 is rotatably supported by a bearing 41.

The rotor 30 includes a multiplicity of (e.g., twenty-one) permanent magnets 33 disposed at an equal pitch along the circumference of the rotor 30. The rotor 30 is an integrally-molded member including a rotor base 31 having a circular disk shape and an annular flange section 32 extending from the outer circumferential edge of the rotor base 31 along the rotation shaft 40. The rotor base 31 is located adjacent to one axial side surface 20a of the stator 20, and the annular flange section 32 surrounds the entire circumferential surface of the stator 20.

The permanent magnets 33 are disposed at an equal pitch along, and fixed to, the inner circumferential surface of the annular flange section 32. The annular flange section 32 functions as a magnetically permeable yoke. Alternatively, such a yoke may be in the form of a separate member fitted in the inner circumferential surface of the annular flange section 32.

The permanent magnets 33 are disposed in such a manner that every two magnetic poles adjoining each other along the circumference of the annular flange section 32 are of opposite poles (heteropolar). Further, each of the permanent magnets 33 is located radially outward of the stator 20 with a predetermined air gap Ga interposed between the permanent magnet 33 and the stator 20. Namely, the air gap Ga is provided between each of the permanent magnets 33 and the outer peripheral surface of each of the salient poles 23.

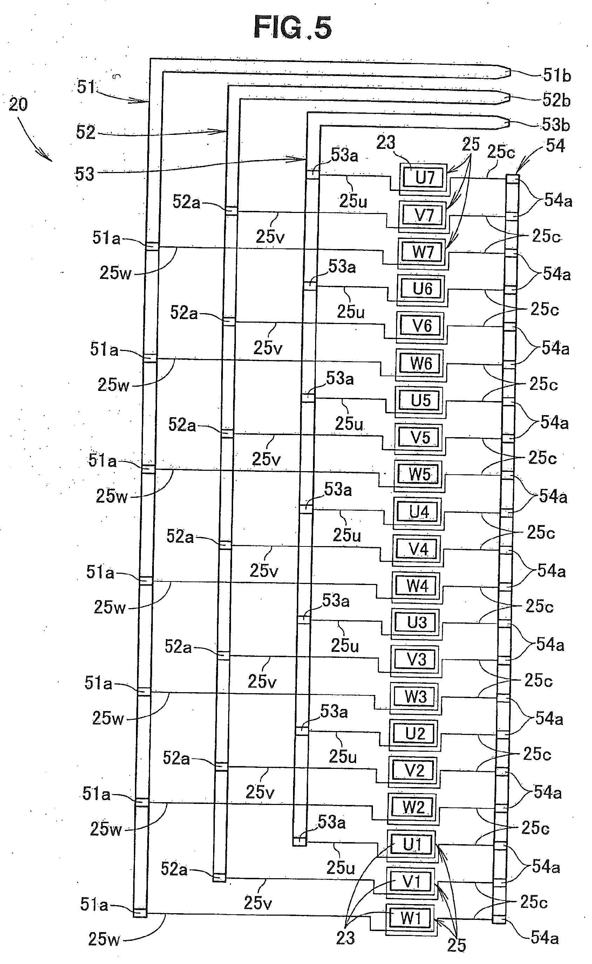

Fig. 5 is a development diagram showing the salient poles 23 and the armature windings 25, wound on the salient poles 23, developed in the circumferential direction of the stator 20. As shown in Fig. 5, the armature windings 25 are wound on corresponding ones of the salient poles 23. More specifically, the armature windings 25 are wound on the twenty-one salient poles 23 are disposed in a total of seven winding sets each comprising three phases, i.e. U, V and W phases.

Here, to distinguish among the twenty-one salient poles 23, reference characters, consisting of alphabetical letters U, V and W representative of the three phases and numerals representative of pole set numbers, are attached to seven sets of the salient poles 23 corresponding to the seven winding sets. Namely, the twenty-one salient poles 23 are disposed along the circumference of the stator 20 in an order of W1, V1, U1; W2, V2, U2; W3, V3, U3; W4, V4, U4; W5, V5, U5; W6, V6, U6; and W7, V7, U7.

Each of the W-phase armature windings 25 wound on the seven W-phase salient poles W1, W2, ... W7 is fixed at one end 25w to any one of seven terminals 51a formed on a first bus ring 51 (i.e., first bus ring terminals 51a) through fusing, i.e. thermal caulking, or the like.

Further, each of the V-phase armature windings 25 wound on the seven V-phase salient poles V1,V2, ... V7 is fixed at one end 25v to any one of seven terminals 52a formed on a second bus ring 52 (i.e., second bus ring terminals 52a) through fusing or the like.

Further, each of the U-phase armature windings 25 wound on the seven U-phase salient poles U1, U2, ... U7 is fixed at one end 25u to any one of seven terminals 53a formed on a third bus ring 53 (i.e., third bus ring terminals 53a) through fusing or the like.

Namely, the respective one ends 25w, 25v and 25u of the armature windings 25 are external connection ends that are connected with one another in three phases, i.e. individually for each of the three phases. Thus, such one ends 25w, 25v and 25u will hereinafter be referred to as "external connection ends 25w, 25v and 25u". The above-mentioned first bus ring terminals 51a, second bus ring terminals 52a and third bus ring terminals 53a are displaced in phase from one another in the circumferential direction of the stator 20. The first, second and third bus rings 51, 52 and 53 are connected to the outside divided in three phases (W, V and U phases) and have their respective external terminals 51b, 52b and 53b.

The respective other ends 25c of the armature windings 25 are fixed to twenty-one terminals 54a of a fourth bus ring 54 (fourth bus ring terminals 54a) through fusing or the like. Namely, the other ends 25c of the armature windings 25 are neutral ends all connected to the fourth bus ring 54. Hereinafter, the other ends 25c of the armature windings 25 will be referred to as "neutral ends 25c".

The above-mentioned four bus rings 51 to 54 each have an annular shape concentric with the rotation shaft 40 (Fig. 1), and these bus rings 51 to 54 have substantially (fundamentally) the same size.

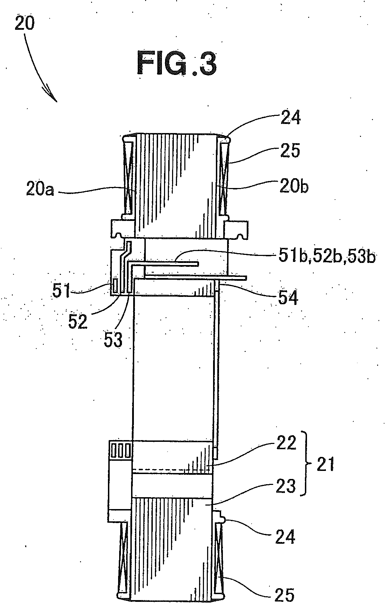

Further, as shown in Figs. 3 and 5, the external connection ends 25w, 25v and 25u are located on the one axial side, i.e. one axial side surface 20a (see Fig. 3), of the stator 20. The neutral ends 25c are located on the other axial side, i.e. the other axial side surface 20b (see Fig. 3), of the stator 20 opposite the external connection ends 25w, 25v and 25u.

Further, as shown in Fig. 1, the one axial side surface 20a faces toward the lid 12, while the other axial side surface 20b faces toward the bottom surface 11a of the casing 11.

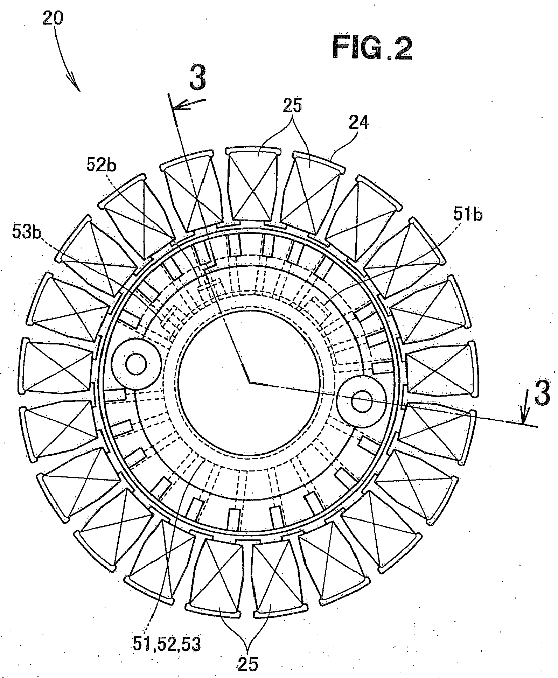

Further, as shown in Figs. 2 to 4, the first, second and third bus rings 51, 52 and 53 are disposed at predetermined intervals along the axis of the rotation shaft 40 and integrally on the one axial side surface 20a of the stator 20. The respective external connection terminals 51b, 52b, and 53b of the first, second and third bus rings 51, 52 and 53 extend axially through the stator 20 toward the other axial side surface 20b. The external connection terminals 51b, 52b, and 53b are connectable to external wiring via a bus bar provided on the casing 11 (see Fig. 1). The fourth bus 54 is provided integrally on the other axial side surface 20b of the stator 20.

As set forth above, the embodiment of the multi-pole, three-phase rotary electric machine of the present invention employs the so-called parallel connection configuration where the respective neutral ends 25c of all of the armature windings 25 are connected together to the fourth bus ring 54, as illustratively shown in Fig. 5. Conventionally, in the case where such a parallel connection configuration is employed, the total number of the bus ring terminals 51a, 52a, 53a and 54a would have to be two times the number of the armature windings 25. Thus, if all of the bus rings 51 to 54 are disposed on one surface of the stator 20, the bus ring terminals 51a, 52a, 53a and 54a would densely crowd close to one another.

To lessen the dense crowding of the bus ring terminals 51a, 52a, 53a and 54a, the multi-pole, three-phase rotary electric machine of the present invention is characterized in that the fourth bus ring 54 is disposed opposite the first, second and third bus rings 51, 52 and 53 with respect the stator 20. Thus, in the present invention, the first, second and third bus ring terminals 51a, 52a and 53a and the fourth bus ring terminals 54a are located dispersedly, and accordingly, the intervals among the first, second and third bus ring terminals 51a, 52a and 53a can be increased.

The foregoing description about the present invention may be summarized as follows. Namely, as shown in Fig. 5, the multiplicity of external connection ends 25w, 25v and 25u and the multiplicity of neutral ends 25c are disposed opposite from each other with respect to the stator 20 having the multiplicity of armature windings 25 provided thereon. Thus, the multiplicity of external connection ends 25w, 25v and 25u and the multiplicity of neutral ends 25c can be disposed dispersedly on the stator 20 without densely crowding close to one another. In this way, the disposed pitches among the terminals 51a, 52a, 53a and 54a for connecting the respective ends of the multiplicity of armature windings 25 can be increased, so that sufficient electrical insulation distances among the terminals 51a, 52a, 53a and 54a can be secured with ease.

For example, it is possible to secure sufficient pitches among the bus ring terminals 51a, 52a, 53a and 54a without increasing the diameters of the bus rings 51 to 54 for connecting the respective ends 25w, 25v, 25u and 25c of the multiplicity of armature windings 25. Thus, the respective ends 25w, 25v, 25u and 25c of the multiplicity of armature windings 25 and the bus ring terminals 51a, 52a, 53a and 54a can be easily fused with each other. In this way, the stator 20 having the multiplicity of armature windings 25 provided thereon can be manufactured automatically. Besides, by reducing the diameters of the bus rings 51 to 54, it is possible to reduce the size of the rotary electric machine 10. Further, the present invention can increase the number of the armature windings 25 while avoiding an increase in the diameters of the bus rings 51 to 54 and thus can provide a stator 20 having the increased number of the armature windings 25.

Finally, the multi-pole, three-phase rotary electric machine of the present invention is well suited for application to small-size motors.
A multi-pole, three-phase rotary electric machine includes a multiplicity of armature windings (25) provided on a stator (20). Respective one ends (25w, 25v, 25u) of the armature windings (25) are external connection ends that are connected with one another in three phases, while respective other ends (25c) of the armature windings (25) being neutral ends that are all connected together with one another. The external connection ends (25w, 25v, 25u) of the multiplicity of armature windings (25) are located on one axial side of the stator (20), and the neutral ends (25c) of the multiplicity of armature windings (25) are located on the other axial side of the stator (20) opposite the external connection ends (25w, 25v, 25u).

## Claims

1. A multi-pole, three-phase rotary electric machine comprising a multiplicity of armature windings (25) provided on a stator (20), respective one ends (25w, 25v, 25u) of the armature windings (25) being external connection ends that are connected with one another in three phases, respective other ends (25c) of the armature windings (25) being neutral ends that are all connected together with one another,
the external connection ends (25w, 25v, 25u) of the multiplicity of armature windings being located on one axial side of the stator (20),
the neutral ends (25c) of the multiplicity of armature windings (25) being located on another axial side of the stator (20) opposite the external connection ends (25w, 25v, 25u).
